# EUROPÄISCHE PATENTSCHRIFT

(11) **EP 0 844 274 B1**
(45) Veröffentlichungstag und Bekanntmachung des Hinweises auf die Patenterteilung: **10.03.2004**
(21) Anmeldenummer: 97119148.1
(22) Anmeldetag: 03.11.1997
(51) Int. Cl.: C08J 11/06

(54) **Thermoplastische Polyurethane sowie Verfahren zu deren Herstellung**
Thermoplastic polyurethanes and process for their preparation
Polyuréthanes thermoplastiques et procédé de leur préparation

(30) Priorität: 21.11.1996 DE 19648192
(43) Veröffentlichungstag der Anmeldung: 27.05.1998
(73) Patentinhaber: BASF AKTIENGESELLSCHAFT, 67056 Ludwigshafen (DE)
(72) Erfinder: Genz, Manfred, Dr., 49401 Damme (DE); Prissok, Frank, Dr., 49448 Lemförde (DE); Horn, Peter, Dr., 69118 Heidelberg (DE); Krech, Ruediger, 49356 Diepholz (DE); Lehr, Gerhard, 67365 Schwegenheim (DE); King, Horst, Dr., 67117 Limburgerhof (DE)

(56) Entgegenhaltungen:
- DE-A- 1 753 702
- US-A- 3 935 132

## Beschreibung

Die Erfindung bezieht sich auf Verfahren zur Herstellung von thermoplastischen Polyurethanen unter Wiederverwendung von vernetzten Polyurethanen in zerkleinerter Form.

Thermoplastische Polyurethane, im folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung, die kontinuierlich oder diskontinuierlich nach verschiedenen bekannten Verfahren, beispielsweise dem Bandoder dem Extruderverfahren, durchgeführt werden kann. Eine Übersicht über TPU, ihre Eigenschaften und Anwendungen wird z.B. im "Kunststoff-Handbuch", Band 7, Polyurethane, 3. Auflage, 1993, herausgegeben von G. Oertel, Carl Hanser Verlag, München gegeben.

Die thermoplastische Verarbeitung würde ein einfaches und günstiges Verfahren zur Wiederverwendung von Polyurethanabfällen darstellen. Dies ist im Falle von beispielsweise zelligen oder mikrozelligen Polyurethanelastomeren nicht möglich, da diese aufgrund ihrer dreidimensional vernetzten Struktur und den oftmals enthaltenden Harnstoffkomponenten an sich nicht thermoplastisch zu verarbeiten sind.

Für die Wiederverwertung von Polyurethanen sind chemische Verfahren wie Hydrolyse, Hydrierung, Pyrolyse und Glykolyse geeignet. Desweiteren können die Polyurethane in Isocyanaten aufgelöst und das dadurch nach Reinigung erhaltene Gemisch der Wiederverwendung zugeführt werden (DE-A-43 16 389). Diesen Verfahren ist gemeinsam, daß die Polyurethane nur mit erheblichem Aufwand an Rohstoffen und Energie wieder in einen Produktionsprozeß eingeführt werden können.

Weitere Verfahren zum Recycling, die z.B. in "Polyurethanes Recycling - Status Report", K.W. Kroesen und D.A. Hicks, 1993, Cellular Polymers, paper 16, 1-6 dargestellt sind, bestehen in der Herstellung von kompakten Polyurethanen aus zerkleinerten Elastomeren ("Flake Bonding") oder in der Verwendung als Füllmaterial bei der Herstellung von Duromeren.

US-A-3 935 132 Offenbart Mischungen von thermoplastischen Urethan polymeren und zerkleinerten vernetzten Polyurethanen.

Die Aufgabe der vorliegenden Erfindung bestand darin, ein Verfahren zur Herstellung von thermoplastischen Polyurethanen durch Umsetzung von (a) Isocyanaten, (b) gegenüber Isocyanaten reaktiven Verbindungen sowie gegebenenfalls (c) Kettenverlängerungsmitteln, (d) Katalysatoren und gegebenenfalls (e) Hilfs- und Zusatzstoffen zu entwickeln, mit dem Polyurethane, die eine vernetzte Struktur aufweisen und somit nicht an sich thermoplastisch verarbeitbar sind, beispielsweise und bevorzugt zellige Polyurethane, besonders bevorzugt mikrozellige Polyurethanelastomeren, ohne aufwendige chemische Verfahren thermoplastisch verarbeitet werden können.

Diese Aufgabe konnte erfindungsgemäß dadurch gelöst werden, daß man dem Reaktionsgemisch vor und/oder während der Umsetzung vernetzte Polyurethane in zerkleinerter Form zugibt.

Die zur Wiederverwendung vorgesehenen vernetzten Polyurethane werden mit üblichen Verfahren zerkleinert, beispielsweise geschreddert, z.B. in einer Rotations- oder Drehmühle bei Raumtemperatur auf eine Korngröße von üblicherweise kleiner 10 mm, oder zermahlen, z.B. nach bekannten Kaltmahlverfahren, beispielsweise unter Kühlung mit flüssigem Stickstoff, in einer Walzen- oder Hammermühle auf eine Korngröße von kleiner 1 mm.

Die zerkleinerten vernetzten Polyurethane, im Folgenden auch zerkleinerte Polyurethane genannt, weisen üblicherweise eine Größe von 0,1 bis 25 mm auf, bevorzugt 0,5 bis 10 mm, insbesondere 2 bis 6 mm. Für die Zugabe der zerkleinerten Polyurethane in das Reaktionsgemisch vor der Umsetzung des Reaktionsgemisches beträgt die bevorzugte Korngröße 0,1 bis 2 mm.

Die zerkleinerten Polyurethane mischt man mit mindestens einer der Komponenten oder mit dem Reaktionsgemisch vor, während oder nach der Umsetzung der Komponenten. Zum Beispiel kann man die zerkleinerten Polyurethane zu der Reaktionsmischung enthaltend (a) Isocyanate, (b) gegenüber Isocyanaten reaktiven Verbindungen, beispielsweise mit einem Molekulargewicht von 500 bis 8000 g/mol, sowie gegebenenfalls (c) Kettenverlängerungsmitteln, (d) Katalysatoren und gegebenenfalls (e) Hilfs- und Zusatzstoffen geben und anschließend in einem allgemein üblichen Reaktionsextruder zu thermoplastischen Polyurethan umsetzen.

Die zerkleinerten Polyurethane werden üblicherweise in einem Gewichtsverhältnis von 0,001 : 1 bis 4 : 1 zu dem Gewicht des Reaktionsgemisches eingesetzt, bevorzugt in einem Gewichtsverhältnis von 0,01 : 1 bis 1 : 1, besonders bevorzugt 0,1 : 1 bis 0,4 : 1.

Die Mischungen der Komponenten (a), (b) und gegebenenfalls (c), (d) und (e) zur Herstellung der TPU weisen üblicherweise ein Äquivalenzverhältnis von Isocyanat-Gruppen der Komponente (a) zur Summe der reaktiven Wasserstoffatome der Komponenten (b) und (c) von 0,9 : 1 bis 1,5 : 1, bevorzugt 1,05 : 1 bis 1,2 : 1 auf, da aufgrund der Einarbeitung der zerkleinerten Polyurethane in eine der Komponenten, in die Mischung oder in die mit diesen Mischungen hergestellten TPU ein zusätzlicher Verbrauch an Isocyanatgruppen auftreten kann.

Die zerkleinerten Polyurethane, die man dem Reaktionsgemisch vor und/oder während der Umsetzung zugibt, können vorteilhaft mit Weichmacher vermischt worden sein und diesen aufgenommen haben. In Anspruch 6 ist auch eine Verfahrensweise der Zugabe nach der Umsetzung des Reaktionsmischung definiert. Beispielsweise kann man die zerkleinerten Polyurethane mit dem Weichmacher oder Gemischen, die Weichmacher enthalten, mischen, bevorzugt in einem Gewichtsverhältnis der Polyurethane zu dem Weichmacher von mindestens 1 : 0,2, besonders bevorzugt 1 : : 0,2 bis 1 : 5, insbesondere 1 : 0,5 bis 1 : 2, wobei die Polyurethane den Weichmacher aufnehmen. Die Temperatur beträgt bei dem Mischvorgang vorzugsweise 40 bis 70°C, niedrigere oder höhere Temperaturen sind aber auch geeignet. Als übliche Weichmacher können z.B. Phthalate, beispielsweise Di-2-ethylhexylphthalat, Dioktylphthalat, Oktylbenzylphthalat, Butylbenzylphthalat, Dibutylglykolphthalat, Bismethyldiglykolphthalat oder Dibutylphthalat, phosphororganische Verbindungen wie z.B. Tris-(2-chlorethyl)-phosphat, Tris-(chlorpropyl)-phosphat, Methylphosphonsäure-dimethylester, Diphenylkresylphosphat oder Trikresylphosphat, Adipin-, Azelain- oder Sebazinsäureester, Alkyl-Sulfonsäure-Phenyl-Ester, Acetyl-tributylcitrat, epoxidierte Fettsäureester, allgmein bekannte Polyester-, Oligomer- und Polymerweichmacher, Tri-2-ethylhexyltrimellitat, Tri-iso-octyltrimellitat, Dibutyladipat, Dioktyladipat sowie weitere, als Weichmacher allgemein bekannte Stoffe verwendet werden. Bevorzugt setzt man Butylbenzylphthalat als Weichmacher ein.

Das Aufnehmen des Weichmachers in die Polyurethane kann nach Vermischen der Komponenten über einen Zeitraum von 5 bis 60 min erfolgen, wobei diese Zeiten von den Temperaturen und eventuell anzuwendenden Hilfsmitteln (z.B. Mischen, Rühren und Schütteln) abhängen. Verfahren, die diesen Vorgang beschleunigen, wie z.B. Rühren und Schütteln, können bevorzugt angewandt werden. Bevorzugt setzt man diese zerkleinerten Polyurethane enthaltend Weichmacher, bevorzugt in einem Gewichtsverhältnis von Polyurethan zu Weichmacher von 1:0,2 bis 1:2, ein, wenn die zerkleinerten Polyurethane nach der Umsetzung der Komponenten (a), (b) und gegebenenfalls (c), (d) und (e) mit dem Reaktionsgemisch, d.h. den TPU, verarbeitet, z.B. extrudiert, werden.

Die Verarbeitung der zerkleinerten Polyurethane enthaltend den Weichmacher mit den TPU, die üblicherweise als Granulat oder in Pulverform vorliegen, erfolgt nach üblichen Verfahren. Beispielsweise mischt man die TPU mit den zerkleinerten Weichmacher enthaltenden Polyurethanen z.B. bei Temperaturen von 0 bis 150°C, vorzugsweise 10 bis 100°C und insbesondere 10 bis 35°C. Anschließend kann man das Gemisch bei einer Temperatur im Bereich von 150 bis 250°C, vorzugsweise 160 bis 230°C und insbesondere 180 bis 220°C, im beispielsweise fließfähigen, erweichten oder geschmolzenen Zustand, vorzugsweise mit Entgasung, z.B. durch Rühren, Walzen, Kneten oder Extrudieren, beispielsweise unter Verwendung einer Walzvorrichtung, eines Kneters oder eines Extruders homogenisieren und zu den gewünschten TPU verarbeiten. Vorzugsweise werden die zerkleinerten zelligen Polyurethane und die TPU in Mischungen oder einzeln in einen Extruder eingebracht, z.B. bei Temperaturen von 150 bis 250°C, vorzugsweise von 160 bis 230°C und insbesondere von 180 bis 220°C, teilweise geschmolzen, die Mischung extrudiert, z.B. auf einer Ein- oder Zweiwellenmaschine, vorzugsweise mit Entgasung, abgekühlt und anschließend granuliert. Die Granulate können zwischengelagert oder direkt zu den gewünschten Produkten weiterverarbeitet werden.

Aufgrund der Aufnahme der Weichmacher in die zerkleinerten Polyurethane sind diese hervorragend mit den TPU zu verarbeiten und weisen die Produkte sehr gute Eigenschaften auf.

Bevorzugt setzt man als zerkleinerte Polyurethane zellige Polyurethane, insbesondere mikrozellige Polyurethanelastomere, auch mikrozelluläre Polyurethanelastomere genannt, ein.

Die zerkleinerten Polyurethane sowie die Mischungen zur Herstellung von thermoplastischen Polyurethanelastomeren basieren bekannterweise auf (a) organischen Isocyanaten, (b) gegenüber Isocyanaten reaktiven Verbindungen mit einem Molekulargewicht von 500 bis 8000 g/mol sowie gegebenenfalls (c) Kettenverlängerungsmitteln, (d) Katalysatoren und gegebenenfalls (e) Hilfs- und Zusatzstoffen. Die zerkleinerten Polyurethane können desweiteren unter Verwendung von Vernetzungsmitteln sowie Treibmitteln, z.B. Wasser hergestellt worden sein.

Die genannten Komponenten werden im Folgenden beschrieben:
a) Als organische Isocyanate (a) kommen vorzugsweise aliphatische, cycloaliphatische und insbesondere aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethylbutylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4-Cyclohexandiisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4-Diphenylmethan-diisocyanate, 4,4'-Diisocyanato-diphenylethan-(1,2) und 1,5-Naphthylen-diisocyanat. Vorzugsweise verwendet werden Hexamethylen-diisocyanat-1,6, 4,4'-Dicyclohexylmethan-diisocyanat, Isophoron-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.
b) Als gegenüber Isocyanaten reaktive Substanzen (b) eignen sich beispielsweise Polyhydroxylverbindungen mit Molekulargewichten von 500 bis 8000, vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol,1,6, hergestellt durch Umesterung, mit den oben genannten Molekulargewichten. Die genannten Polyhydroxylverbindungen können als Einzelkomponenten oder in Form von Mischungen zur Anwendung kommen.
   Die Mischungen zur Herstellung der TPU bzw. die TPU müssen zumindest überwiegend auf difunktionellen gegenüber Isocyanaten reaktiven Substanzen basieren. Die mit diesen Mischungen hergestellten TPU sind somit vorwiegend unverzweigt, d.h. überwiegend nicht vernetzt, aufgebaut.
   Geeignete Polyetherole können hergestellt werden nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 reaktive Wasserstoffatome gebunden enthält. Als Alkylenoxide seien z.B. genannt: Ethylenoxid, 1,2-Propylenoxid, Tetrahydrofuran, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-dialkanolamine, beispielsweise N-Methyl-diethanolamin und Diole, z.B. Alkandiole oder Dialkylenglykole mit 2 bis 12 C,Atomen, vorzugsweise 2 bis 6 C-Atomen, wie Ethandiol, Propandiol-1,3, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).
   Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylen-glykole.
   Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.
   Die im Falle der TPU im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.
   Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimethylpropandiol-1,3, Propandiol-1,2 und Dialkylenether-glykole wie Diethylenglykol und Dipropylenglykol. Je nach den gewünschten Eigenschaften können die mehrwertigen Alkohole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise (ω-Hydroxycapronsäure und vorzugsweise Polymerisationsprodukte von Lactonen, beispielsweise gegebenenfalls substituierten ω-Caprolactonen.
   Als Polyesterole vorzugsweise verwendet werden Alkandiol-polyadipate mit 2 bis 6 Kohlenstoffatomen im Alkylenrest, wie z.B. Ethandiol-polyadipate, 1,4-Butandiol-polyadipate, Ethandiolbutandiol-1,4-polyadipate, 1,6-Hexandiol-neopentylglykol-polyadipate, Polycaprolactone und insbesondere 1,6-Hexandiol-1,4-butandiol-polyadipate.
   Die Polyesterole besitzen Molekulargewichte (Gewichtsmittel) von 500 bis 6000, vorzugsweise von 800 bis 3500.
c) Als Kettenverlängerungsmittel (c), die üblicherweise Molekulargewichte von 60 bis 499, vorzugsweise 60 bis 300 aufweisen, kommen vorzugsweise Alkandiole mit 2 bis 12 Kohlenstoffatomen, vorzugsweise mit 2,4 oder 6 Kohlenstoffatomen, wie z.B. Ethandiol, Hexandiol-1,6, und insbesondere Butandiol-1,4 und Dialkylenetherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephthalsäure-bis-ethandiol oder -butandiol-1,4, Hydroxyalkylenether des Nydrochinons, wie z.B. 1,4-Di-(β-hydroxyethyl)-hydrochinon, (cyclo) aliphatische Diamine, wie z.B. 4,4'-Diaminodicyclohexylmethan. 3,3'-Dimethyl-4,4'-diaminodicyclohexylmethan, 1-Amino-3,3,5-trimethyl-5-aminomethyl-cyclohexan, Ethylendiamin, 1,2-, 1,3-Propylen-diamin, N-Methyl-propylendiamin-1,3, N,N'-Dimethylethylendiamin und aromatische Diamine, wie z.B 2,4- und 2,6-Toluylen-diamin, 3,5-Diethyl-2,4- und - 2,6-toluylen-diamin und primäre, ortho-di-, -tri- und/oder - tetraalkylsubstituierte 4,4'-Diamino-diphenylmethane. Als Kettenverlängerungsmittel finden vorzugsweise Verwendung Alkandiole mit 2 bis 6 C-Atomen im Alkylenrest, insbesondere Butandiol-1,4 und/oder Dialkylenglykole mit 4 bis 8 Kohlenstoffatomen.
   Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 6,4, wobei die Harte und der Schmelzpunkt der TPU mit zunehmendem Gehalt an Diolen ansteigt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die zinndialkylsalze aliphatischer Carbonsäuren wie Dibutylzinndiacetat, Dibutylzinndilaurat oder ähnliche. Die Katalysatoren werden üblicherweise in Mengen von 0,002 bis 0,1 Teilen pro 100 Teile Polyhydroxylverbindung (b) eingesetzt.
e) Neben Katalysatoren können den Aufbaukomponenten (a) bis (c) auch übliche Hilfsmittel und/oder Zusatzstoffe (e) hinzugefügt werden. Genannt seien beispielsweise oberflächenaktive Substanzen, Schaumstabilisatoren, Zellregler, Füllstoffe, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, Farbstoffe, anorganische und/oder organische Füllstoffe, Verstärkungsmittel und Weichmacher.

Nähere Angaben über die oben genannten Hilfsmittel- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem vorgenannten Kunststoff-Handbuch, Band XII, Polyurethane oder der DE-OS 29 01 774 zu entnehmen.

Die zerkleinerten vernetzten Polyurethane können des weiteren unter Verwendung von bekannten Vernetzungsmitteln mit einem Molekulargewicht von kleiner 499, d.h. gegenüber Isocyanaten reaktiven Verbindungen, die im Sinne der Isocyanatreaktion mindestens trifunktionell sind, Treibmitteln wie z.B. Stoffe, die einen Siedepunkt unter Normaldruck im Bereich von -40°C bis 120°C besitzen, Gase sowie feste Treibmittel und insbesondere Wasser, das auch vernetzend wirkt, hergestellt worden sein. Desweiteren können die zerkleinerten vernetzten Polyurethane unter Verwendung von allgemein bekannten gegenüber Isocyanaten reaktiven Verbindungen mit Molekulargewichten von 500 bis 8000 hergestellt worden sein, die eine Funktionalität von größer 2, beispielsweise 3 bis 9, aufweisen und so wie die Vernetzungsmittel mit einem Molekulargewicht von kleiner 499 zu einer Vernetzung der Polyurethane führen. Diese vernetzten Polyurethane sind an sich nicht thermoplastisch verarbeitbar.

Die zelligen Polyurethane, insbesondere die mikrozelligen Polyurethanelastomere basieren bevorzugt auf 1,5-Naphthylen-diisocyanat (1,5-NDI), Polyphenyl-polymethylen-polyisocyanaten (Polymer-MDI, PMDI) mit zwei oder mehr aromatischen Systemen, Mischungen aus 2,4'-, 2,2'-, und 4,4'-Diphenylmethan-diisocyanaten und Polyphenyl-polymethylen-polyisocyanaten (Roh-MDI), Mischungen aus Roh-MDI und Toluylen-Diisocyanaten und/oder Polyphenyl-Polyisocyanate sowie vorzugsweise auf Polyhydroxylverbindungen als gegenüber Isocyanaten reaktive Substanzen mit einer Funktionalität von 2 bis 3, vorzugsweise 2, und können bevorzugt mit Wasser als Treib- und Vernetzungsmittel hergestellt worden sein.

Wie bereits dargelegt wurde, kann das Reaktionsgemisch enthaltend (a), (b) und gegebenenfalls (c), (d) und/oder (e) vor, während oder gemäß Anspruch 6 nach der Umsetzung mit den zerkleinerten Polyurethanen, vorzugsweise zelligen Polyurethanelastomeren, insbesondere mikrozelligen Polyurethanelastomeren nach dem Extruderverfahren oder vorzugsweise nach dem Bandverfahren umgesetzt werden. Im einzelnen wird beim Bandverfahren auf folgende Weise verfahren:

Die Aufbaukomponenten (a) bis (c) und die zerkleinerten Polyurethanelastomere, die in diesem Falle vorzugsweise eine Korngröße von kleiner 3 mm aufweisen, sowie gegebenenfalls (d) und/oder (e) werden bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise Förderband, aufgebracht und durch eine temperierte Zone geführt. Die Reaktionstemperatur in der temperierten Zone kann 60 bis 200°C, vorzugsweise 100 bis 180°C betragen und die Verweilzeit liegt im allgemeinen bei 0,05 bis 0,5 Stunden, vorzugsweise 0,1 bis 0,3 Stunden. Nach beendeter Reaktion läßt man das TPU abkühlen und zerkleinert oder granuliert es anschließend.

Beim Extruderverfahren werden die Aufbaukomponenten (a) bis (c) und die zerkleinerten Polyurethanelastomere sowie gegebenenfalls (d) und (e) einzeln oder als Gemisch in den Extruder eingeführt, z.B. bei Temperaturen von 100 bis 250°C, vorzugsweise 140 bis 220°C zur Reaktion gebracht, das erhaltene TPU wird extrudiert, abgekühlt und granuliert.

Werden bereits umgesetzte TPU mit den zerkleinerten Polyurethanen extrudiert, so verwendet man zerkleinerte Polyurethanelastomere, die Weichmacher enthalten.

Die erfindungsgemäßen Vorteile sollen anhand der folgenden Beispiele dargestellt werden.

### Beispiel 1

5000 g mikrozellige Polyurethanelastomere (Cellasto®) wurden geschreddert und die zerkleinerten Elastomere anschließend mit Butylbenzylphthalat als Weichmacher in unterschiedlichen Gewichtsverhältnissen bei einer Temperatur von 50°C gemischt. Aufgrund der zelligen Struktur nimmt das Elastomer den Weichmacher sehr gut auf, so daß ein Vermischen der Komponenten bei einer Temperatur von 40 bis 60°C für den Quellvorgang über einen Zeitraum von 5 bis 15 min ausreicht. 1000 g des zerkleinerten, mit dem Weichmacher gequollenen Elastomers wurden anschließend mit einem thermoplastischen Polyurethanelastomer auf der Basis von Polybutandiolethandioladipat, mittleres Molekulargewicht 2000 g/mol, MDI, Butandiol und einem Carbodiimid, in unterschiedlichen Gewichtsverhältnissen mit einem 19 mm Zweiwellen-Extruder bei einer Massetemperatur von 220°C, 100 Umdrehungen pro Minute und einem Ausstoß von 3 kg pro Stunde extrudiert. Die thermoplastischen Produkte wiesen die in der Tabelle 1 dargestellten Eigenschaften auf.

**Tabelle 1**

| Produkt | 1 | 2 | 3 | 4 | Vergleich |
|---|---|---|---|---|---|
| TPU [Gew.-%] | 40 | 30 | 50 | 40 | 100 |
| Weichmacher [Gew.-%] | 30 | 40 | 20 | 10 | 0 |
| mikrozelliges Polyurethanelastomer [Gew.-%] Härte | 30 | 30 | 30 | 40 | 0 |
| | 54 A | 47 A | 60 A | 73 A | 83 A |
| Zugfestigkeit [MPa] | 21 | 18 | 22 | 29 | 54 |
| Bruchdehnung [%] | 960 | 1060 | 840 | 760 | 670 |
| Weiterreißwiderstand [N/mm] | 31 | 26 | 38 | 54 | 67 |
| Abrieb [mm³] | 55 | 70 | 70 | 76 | 35 |
| Härte: Shorehärte, DIN 53505 | | | | | |
| Zugfestigkeit: DIN 53504 - S2 | | | | | |
| Bruchdehnung: DIN 53504 - S2 | | | | | |
| Weiterreißwiderstand: DIN 53515 | | | | | |
| Abrieb: DIN 53516 | | | | | |
| Druckverformungsrest: DIN 53517 | | | | | |

Die erfindungsgemäß hergestellten thermoplastischen Polyurethanelastomere zeigen in der Bruchdehnung ein wesentlich verbessertes Verhalten als das Vergleichs-TPU, das ohne zerkleinerte, in Weichmacher gequollene mikrozellige Polyurethanelastomere hergestellt wurde. Eine Verwendung der unter Wiederverwendung von zelligen Elastomeren gewonnenen TPUs mit diesen Eigenschaftsprofil bietet sich beispielsweise für folgende Bereiche an: weiche Spritzgußprodukte, z.B. für die Schuhherstellung, Sohlen, Puffer, beispielsweise Dämpfungselemente, Unterleger, Bodenmatten, Griffe und Dichtungen. Zudem entlastet die Wiederverwendung der vernetzten Polyurethane Rohstoffresourcen und die Abfallwirtschaft.

### Beispiel 2

Mikrozellige Polyurethanelastomere (Cellasto®) wurden geschreddert, die anschließend gemahlenen Produkte wurden mit einer Mischung zur Herstellung von einem thermoplastischen Polyurethan, bestehend aus 1000 Teilen Polybutandioladipat, mittleres Molekulargewicht 2500 g/mol, 880 Teilen MDI, 279 Teilen Butan-1,4-diol und 10 Teilen eines Carbodiimides als Hydrolyseschutz in einem Zweiwellen-Extruder mit 34 mm Schneckendurchmesser und 1190 mm Schneckenlänge bei 215°C Massetemperatur extrudiert. Die thermoplastischen Produkte wiesen die in der Tabelle 2 dargestellten Eigenschaften auf.

**Tabelle 2**

| Produkt | 1 | 2 | 3 | Vergleich |
|---|---|---|---|---|
| TPU [Gew.-%] | 70 | 65 | 60 | 100 |
| mikrozelliges Polyurethanelastomer [Gew.-%] | 30 | 35 | 40 | 0 |
| Härte | 53 D | 52 D | 48 D | 61 D |
| Zugfestigkeit [MPa] | 59 | 64 | 55 | 56 |
| Bruchdehnung [%] | 490 | 540 | 540 | 440 |
| Weiterreißwiderstand [N/mm] | 113 | 103 | 104 | 155 |
| Abrieb [mm³] | 25 | 26 | 26 | 28 |
| Härte: Shorehärte, DIN 53505 | | | | |
| Zugfestigkeit: DIN 53504 - S2 | | | | |
| Bruchdehnung: DIN 53504 - S2 | | | | |
| Weiterreißwiderstand: DIN 53515 | | | | |
| Abrieb: DIN 53516 | | | | |
| Druckverformungsrest: DIN 53517 | | | | |

Ein Vermischen der zerkleinerten mikrozelligen Polyurethanelastomere mit Weichmacher war nicht notwendig, da die Komponenten zur Herstellung des TPU sehr gut von dem zelligen Elastomer aufgenommen wurden. Die Produkte zeigen trotz des Gehaltes von 30 - 40 % mikrozelligen Elastomeren Zugfestigkeiten und Abriebwerte, die denen eines handelsüblichen TPU des gleichen Bereiches der Shorehärte entsprechen. Das Verhalten der thermoplastischen Polyurethane bei der Bruchdehnung konnte man durch das Einarbeiten der zerkleinerten mikrozelligen Polyurethane erheblich verbessern. Aufgrund dieser Eigenschaften sind die erfindungsgemäß hergestellten TPU hervorragend zur Verwendung z.B. in der Schuhindustrie geeignet.

## Patentansprüche

1. Verfahren zur Herstellung von thermoplastischen Polyurethanen durch Umsetzung von (a) Isocyanaten mit (b) gegenüber Isocyanaten reaktiven Verbindungen, gegebenenfalls in Gegenwart von (c) Kettenverlängerungsmitteln, (d) Katalysatoren und (e) üblichen Hilfs- und Zusatzstoffen, **dadurch gekennzeichnet, daß** man dem Reaktionsgemisch vor und/oder während der Umsetzung vernetzte Polyurethane in zerkleinerter Form zugibt.

2. Verfahren nach Anspruch 1, **dadurch gekennzeichnet, daß** die zerkleinerten Polyurethane eine Größe von 0,1 bis 25 mm aufweisen.

3. Verfahren nach den Ansprüchen 1 und 2, **dadurch gekennzeichnet, daß** man die zerkleinerten Polyurethane in einem Gewichtsverhältnis von 0,001 : 1 bis 4 : 1 bezogen auf die Reaktionsmischung einsetzt.

4. Verfahren nach den Ansprüchen 1 bis 3, **dadurch gekennzeichnet, daß** man die zerkleinerten Polyurethane in einem Gewichtsverhältnis von 0,01 : 1 bis 1 : 1 bezogen auf die Reaktionsmischung einsetzt.

5. Verfahren nach den Ansprüchen 1 bis 4, **dadurch gekennzeichnet, daß** das Äquivalenzverhältnis von Isocyanat-Gruppen zur Summe der reaktiven Wasserstoffatome 0,9 : 1 bis 1,5 : 1 beträgt.

6. Verfahren zur Herstellung von thermoplastischen Polyurethanen durch Umsetzung von (a) Isocyanaten mit (b) gegenüber Isocyanaten reaktiven Verbindungen, gegebenenfalls in Gegenwart von (c) Kettenverlängerungsmitteln, (d) Katalysatoren und (e) üblichen Hilfs- und Zusatzstoffen, **dadurch gekennzeichnet, daß** man dem Reaktionsgemisch vor, während und/oder nach der Umsetzung vernetzte Polyurethane in zerkleinerter Form zugibt und man die zerkleinerten Polyurethane mit Weichmacher in einem Gewichtsverhältnis von mindestens 1 : 0,2 mischt, die zerkleinerten Polyurethane den Weichmacher aufnehmen, und man anschließend die zerkleinerten, den Weichmacher enthaltenden Polyurethane dem Reaktionsgemisch vor, während und/oder nach der Umsetzung zugibt.

7. Verfahren nach den Ansprüchen 1 bis 6, **dadurch gekennzeichnet, daß** man dem Reaktionsgemisch nach der Umsetzung zerkleinerte, Weichmacher enthaltende Polyurethane zugibt, und es zu thermoplastischen Polyurethanen verarbeitet.

8. Verfahren nach den Ansprüchen 6 oder 7, **dadurch gekennzeichnet, daß** die zerkleinerten Polyurethane Weichmacher in einem Gewichtsverhältnis von den Polyurethanen zu dem Weichmacher von 1 : 0,2 bis 1 : 2 enthalten.

9. Verfahren nach den Ansprüchen 6 bis 8, **dadurch gekennzeichnet, daß** man als Weichmacher Butylbenzylphthalat verwendet.

10. Verfahren nach den Ansprüchen 1 bis 9, **dadurch gekennzeichnet, daß** die zerkleinerten Polyurethane von zelliger Struktur sind.

11. Verfahren nach den Ansprüchen 1 bis 10, **dadurch gekennzeichnet, daß** die zerkleinerten Polyurethane mikrozellige Polyurethanelastomere sind.

12. Thermoplastische Polyurethane erhältlich durch ein Verfahren nach den Ansprüchen 1 bis 11.

## Claims

1. A process for preparing thermoplastic polyurethanes by reacting (a) isocyanates with (b) compounds reactive toward isocyanates, in the presence or absence of (c) chain extenders, (d) catalysts and (e) customary auxiliaries and additives, wherein crosslinked polyurethanes in comminuted form are added to the reaction mixture before and/or during the reaction.

2. A process as claimed in claim 1, wherein the comminuted polyurethanes have a size of from 0.1 to 25 mm.

3. A process as claimed in claim 1 or 2, wherein the comminuted polyurethanes are used in a weight ratio of from 0.001 : 1 to 4 : 1, based on the reaction mixture.

4. A process as claimed in any of claims 1 to 3, wherein the comminuted polyurethanes are used in a weight ratio of from 0.01 : 1 to 1 : 1, based on the reaction mixture.

5. A process as claimed in any of claims 1 to 4, wherein the equivalence ratio of isocyanate groups to the sum of the reactive hydrogen atoms is from 0.9 : 1 to 1.5 : 1.

6. A process for preparing themoplastic polyurethanes by reacting (a) isocyanates with (b) compounds which are reactive toward isocyanates, in the presence or absence of (c) chain extenders, (d) catalysts and (e) customary auxiliaries and additives, wherein crosslinked polyurethanes in comminuted form are added to the reaction mixture before, during and/or after the reaction and the comminuted polyurethanes are mixed with plasticizer in a weight ratio of at least 1 : 0.2, the comminuted polyurethanes absorb the plasticizer, and the comminuted polyurethanes containing the plasticizer are subsequently added to the reaction mixture before, during and/or after the reaction.

7. A process as claimed in any of claims 1 to 6, wherein comminuted, plasticizer-containing polyurethanes are added to the reaction mixture after the reaction and the mixture is processed to give thermoplastic polyurethanes.

8. A process as claimed in claim 6 or 7, wherein the comminuted polyurethanes contain plasticizer in a weight ratio of the polyurethanes to the plasticizer of from 1 : 0.2 to 1 : 2.

9. A process as claimed in any of claims 6 to 8, wherein the plasticizer used is butyl benzyl phthalate.

10. A process as claimed in any of claims 1 to 9, wherein the comminuted polyurethanes have a cellular structure.

11. A process as claimed in any of claims 1 to 10, wherein the comminuted polyurethanes are microcellular polyurethane elastomers.

12. A thermoplastic polyurethane obtainable by a process as claimed in any of claims 1 to 11.

## Revendications

1. Procédé de préparation de polyuréthanes thermoplastiques par réaction de (a) des isocyanates avec (b) des composés réactifs vis-à-vis des isocyanates, le cas échéant en présence de (c) des agents d'allongement de chaîne, (d) des catalyseurs et (e) des adjuvants et additifs habituels, **caractérisé en ce qu'**on ajoute au mélange réactionnel, avant et/ou pendant la réaction, des polyuréthanes réticulés sous forme fragmentée.

2. Procédé selon la revendication 1, **caractérisé en ce que** les polyuréthanes fragmentés présentent une granulométrie allant de 0,1 à 25 mm.

3. Procédé selon les revendications 1 et 2, **caractérisé en ce qu'**on utilise les polyuréthanes fragmentés dans un rapport pondéral de 0,001 : 1 à 4 : 1 par rapport au mélange réactionnel.

4. Procédé selon les revendications 1 à 3, **caractérisé en ce qu'**on utilise les polyuréthanes fragmentés dans un rapport pondéral de 0,01 : 1 à 1 : 1 par rapport au mélange réactionnel.

5. Procédé selon l'une des revendications 1 à 4, **caractérisé en ce que** le rapport d'équivalence des groupes isocyanate à la somme des atomes d'hydrogène réactifs s'élève à 0,9 : 1 à 1,5 : 1.

6. Procédé de préparation de polyuréthanes thermoplastiques par réaction de (a) des isocyanates avec (b) des composés réactifs vis-à-vis des isocyanates, le cas échéant en présence de (c) des agents d'allongement de chaîne, (d) des catalyseurs et (e) des adjuvants et additifs habituels, **caractérisé en ce qu'**on ajoute avant, pendant et/ou après la réaction les polyuréthanes réticulés sous forme fragmentée et **en ce qu'**on mélange les polyuréthanes fragmentés avec des plastifiants dans un rapport pondéral d'au moins 1 : 0,2, **en ce que** les polyuréthanes fragmentés absorbent le plastifiant, puis **en ce qu'**on ajoute les polyuréthanes fragmentés, contenant le plastifiant, au mélange réactionnel avant, pendant et/ou après la réaction.

7. Procédé selon les revendications 1 à 6, **caractérisé en ce qu'**on ajoute au mélange réactionnel, après la réaction, des polyuréthanes fragmentés contenant des plastifiants, et qu'on les transforme en polyuréthanes thermoplastiques.

8. Procédé selon les revendications 6 ou 7, **caractérisé en ce que** les polyuréthanes fragmentés contiennent des plastifiants dans un rapport pondéral des polyuréthanes au plastifiant de 1 : 0,2 à 1 : 2.

9. Procédé selon les revendications 6 à 8, **caractérisé en ce qu'**on utilise comme plastifiant le phtalate de butylbenzyle.

10. Procédé selon les revendications 1 à 9, **caractérisé en ce que** les polyuréthanes fragmentés sont de structure cellulaire.

11. Procédé selon les revendications 1 à 10, **caractérisé en ce que** les polyuréthanes fragmentés sont des élastomères de polyuréthane microcellulaires.

12. Polyuréthanes thermoplastiques que l'on peut obtenir en employant un procédé selon les revendications 1 à 11.
